# EUROPEAN PATENT SPECIFICATION

(11) **EP 1 764 281 B1**
(45) Date of publication and mention of the grant of the patent: **22.12.2010**
(21) Application number: 06017908.2
(22) Date of filing: 28.08.2006
(51) Int. Cl.: B62B 7/14

(54) **Baby stroller frame with seat direction changing mechanism**
Rahmen für einen Kinderwagen mit einem Mechanismus zur Änderung der Sitzrichtung
Châssis d'une poussette avec un mécanisme pour changer la direction du siège

(30) Priority: 17.09.2005 CN 200520064656 U; 21.07.2006 CN 200620062124 U
(43) Date of publication of application: 21.03.2007
(73) Proprietor: LINK TREASURE LIMITED, Tortola, British Virgin Islands (GB)
(72) Inventor: Yang, Cheng-Fan, Xue-Jia Tainan Hsien (TW)
(74) Representative: TER MEER - STEINMEISTER & PARTNER GbR

(56) References cited:
- EP-A- 0 522 783
- DE-A1- 2 652 238
- DE-C- 50 961
- US-A- 2 842 374

## Description

### FIELD OF THE INVENTION

The present invention relates to a baby stroller frame with seat direction changing mechanism, and more particularly, to allow a seat support can change its direction by turning the handle bar of baby stroller.

### DESCRIPTION OF THE RELATED ART

Baby stroller is provided for baby or small children that can be pushed by an adult for walking forwardly. Normally, the seat and handle bar of a baby stroller is fixed and the baby can only sit inside and then face forwardly, even though the baby is crying and would like see and talk with the adult who is pushing the stroller behind it.

To fulfill this situation, an example of a baby stroller as shown in U.S. Patent 5,845,924 which discloses a handle bar of baby stroller is rotatable to change its direction. The handle bar is pivotally connected to a baby stroller frame and can be fixed direction either forwardly or backwardly. When the direction of the handle bar is changed, the baby can sit inside the baby stroller with the choice of facing and seeing the adult who is walking and pushing the baby stroller forwardly.

The baby stroller of U.S. Patent 5,845,924 provides the good idea and the choice to the user, but some time it seems inconvenience when the user need to change the handle bar direction in a narrow or tiny space, for instance, in a crowded elevator. Further, as an ordinary rear wheel sets are direction-fixed, and the front wheel sets are normally direction-unfixed for easy steer when making a turn, it is difficult to take a left / right tune while the handle bar direction is changed and that swapped the front wheel and the rear wheel sets.

EP 0 522 783 A2 discloses a push chair or baby stroller having a folding chassis with a set of front wheels and a set of rear wheels. A support base is provided on the folding chassis for mounting a seat body thereon. The support base is adopted to permit relative angular movement between the seat body and the chassis about a vertical axis. The support base is provided with locking means for securing the support base or turntable in any of a multiplicity of desired orientations relative to the circular platform.

US 2,842,374 discloses a revolving seat stroller having a stroller chassis with sets of front and rear wheels, a handle bar connected to the chassis at the rear end thereof, and a seat including a seat support axel or pin received in a socket providing a support base. For securing the seat in a certain direction, a locking bold is provided that penetrates through corresponding holes in the support base and the seat support pin or axle.

### SUMMARY OF THE INVENTION

In order to overcome the drawbacks of the prior baby stroller, this invention provides a baby stroller frame with a seat direction changing mechanism. The user can control the mechanism to change the direction of the seat without changing the direction of the handle bar, and the baby can have the choice to sit either in direction of facing forwardly or facing the adult backwardly.

The baby stroller of the present invention as defined by claim 1.

Additional objects and advantages of the invention will be set forth in the following description and it is easy for a person having ordinary skill in this art to infer other variations from above illustrations and embodiments. It is to be understood that both the foregoing general description and the following detailed description are exemplary and explanatory only and are not restrictive of the invention, as claimed.

### BRIEF DESCRIPTION OF THE DRAWINGS

FIG.1 is a perspective view of a stroller frame according to the present invention.

FIG. 2 is an elevational side view of the stroller frame with a seat support in a direction of facing forwardly.

FIG. 3 is a top view of the support frame of the stroller frame of the present invention.

FIG. 4 is an exploded perspective view of the stroller frame of the present invention.

FIG. 5 is an exploded perspective view that showing the connection between the handle bar and the seat support of the present invention.

FIG. 6 is an illustrative view showing the operation of the releasing mechanism and the swivel base according to the present invention.

FIG. 7 is an illustrative elevational side view showing the operation of the handle bar when changing the direction of the seat support.

FIG. 8 is an illustrative partial enlarged view showing the operation of the driver when changing the direction of the seat support.

FIG. 9 is an illustrative side view showing the operation of a handle bar to propel the seat support which connected with a seat thereon.

FIG. 10 is an illustrative side view showing rotation of a handle bar to fix the seat support in a rearward direction.

FIG. 11 is an illustrative partial enlarged view showing the operation of the locking member disengaged from a locking position when changing the direction of the seat support.

### DETAILED DESCRIPTION OF THE PREFERRED EMBODIMENTS

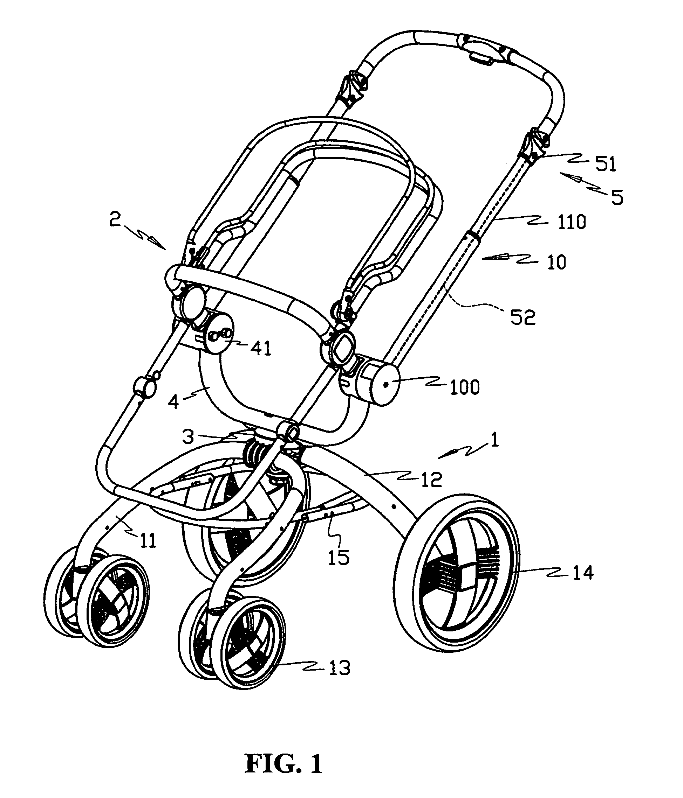

With reference to FIGS. 1 to 5, an embodiment of the stroller frame of the present invention includes a wheeled support frame 1, a seat support 4, a handle bar 10 and a releasing mechanism 5. The wheeled support frame 1 comprises a front leg 11, a rear leg 12 and wheel sets 13, 14. The upper portion of the wheeled support frame 1 is provided with a support base 3 having an axle hole 32 on the top for pivotally connecting the seat support 4 that allows the seat support 4 rotatably changing its direction about the axle hole 32 on top of the wheeled support frame 1.

The releasing mechanism 5 includes a locking member 75 for locking the seat support 4 into a fixed direction status. The releasing mechanism 5 is slidably disposed on the handle bar 10 for actuating the turning of handle bar and the locking member 75 can be pulled by turning the handle bar 10 to set the seat support 4 into a rotatable status, that makes the seat support 4 to be rotatable for changing direction.

The front leg 11 and rear leg 12 are pivotally connected at the lower portion of the support base 3. The lower end of the front leg 11 is provided with a front wheel set 13. The front wheel set 13 can be either a direction-fixed or direction-unfixed wheel set. The lower end of the rear leg 12 is provided with a direction-fixed rear wheel set 14. A linking rod 15 is pivotally interconnected the rear leg 11 and front leg 12.

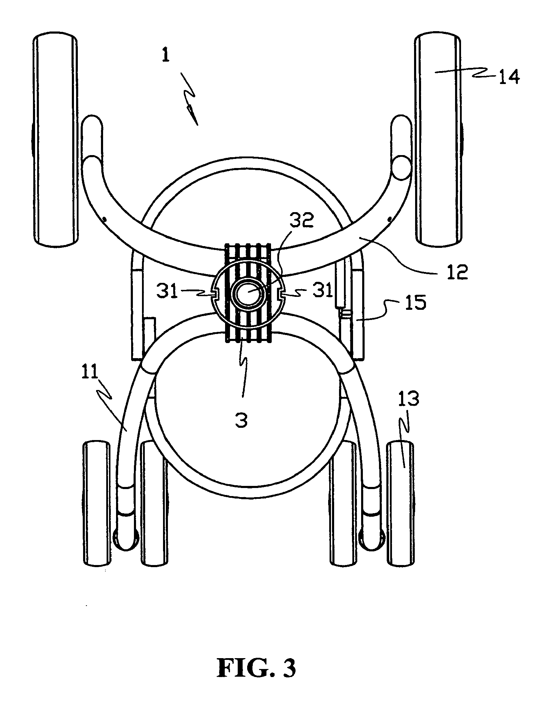

Referring to FIG. 3, the support base 3 is formed with the axle hole 32 and a pair of locking positions 31. The pair of locking positions can be formed as two recesses or indents on the circumference of the support base 3 with an angle of 180° apart.

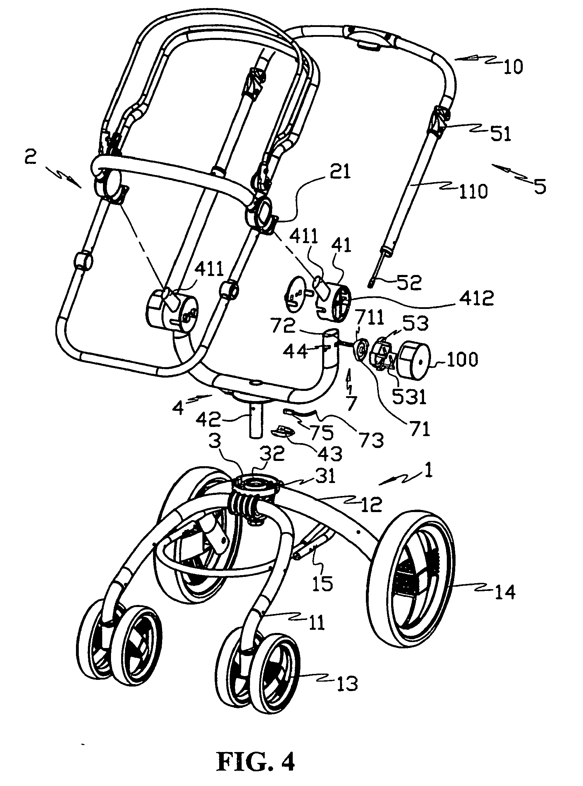

Referring to FIG. 4, the seat support 4 has an axle 42 extended downwardly from lower end for pivotally received and retained within the axle hole 32 and a pair of arms extended upwardly for detachably connecting with a seat frame 2, a carry cot or a vehicle safety seat (not shown). Each end of the arms of the seat support 4 are provided with a connecting base 41 which having a connecting portion 411 extended therefrom.

The connecting base 41 includes a connecting portion 411 and a positioning groove 412. The positioning groove 412 is used to slidably engage with a releasing member 53 for locking the handle bar 10 in either fixable or rotatable status.

As the seat frame 2 is provided to support a seat, a carry cot or a baby vehicle safety seat, each side of the seat frame 2 is provided with a socket 21 for detachably mounting on the connecting portion 411 of the seat support 4.

The handle bar 10 comprises a pair of side tubes 110 each provided with a swivel base 100 at the end portion. The swivel base 100 is pivotally connected to the connecting base 41 that allowed the handle bar 10 to be rotatable and lockable in an inclined angle.

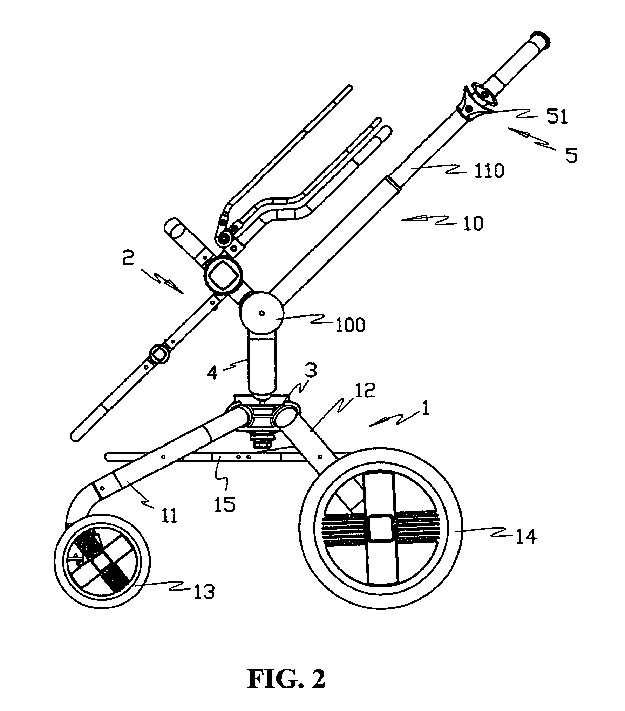

Refering to FIGS. 2, 7 and 10, the handle bar 10 is rotatable when the releasing mechanism 5 actuated the rotation of the handle bar 10.

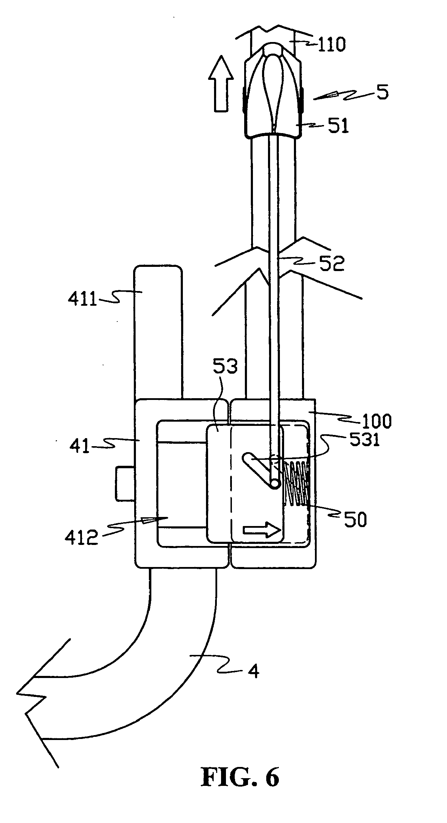

An embodiment of the releasing mechanism 5 as shown in FIG. 6 includes a sliding sleeve 51, a connecting member 52, a releasing member 53 and a resilient member 50. The sliding sleeve 51 is slidably mounted on the side tubes 110. The connecting member 52 is interconnected the sliding sleeve 51 and the releasing member 53. The releasing member 53 has a skewed slot 531 and is linely slidably engaged within the swivel base 100. The resilient member 50 is arranged between the releasing member 53 and the swivel base 100.

The inside of connecting base 41 is formed with one or a plurality of positioning groove 412 for engaging with the releasing member 53 in one or several angle position. The upper end of connecting member 52 is connected to the sliding sleeve 51 and the lower end of connecting member 52 is slidably engaged within the skewed slot 531. When a user pulled the sliding sleeve 51, the lower end of the connecting member 52 shall slides along the skewed slot 531 and and yields a component of force to pull back the releasing member 53 from the positioning groove 412 against the resilient member 50. By this way, the handle bar 10 is rotatable and adjustable in angle.

When the sliding sleeve 51 is released, the resilient member 50 keeps biasing against the releasing member 53 to force it engage with the positioning groove 412. The engagement of releasing member 53 within the positioning groove 412 prevents the handle bar 10 from freely rotation.

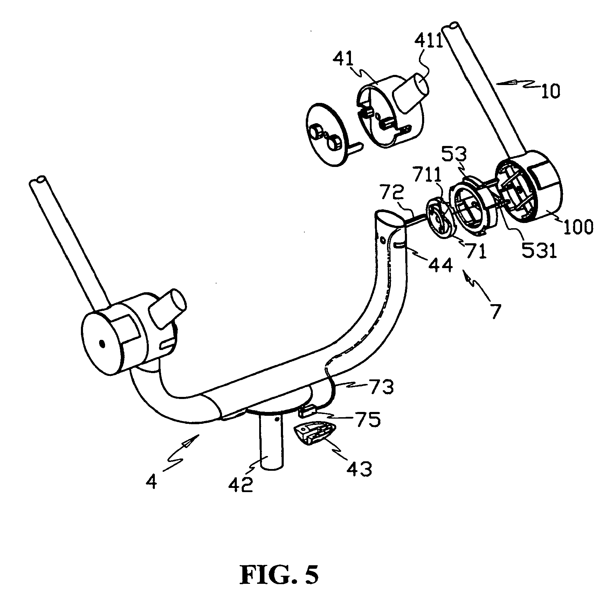

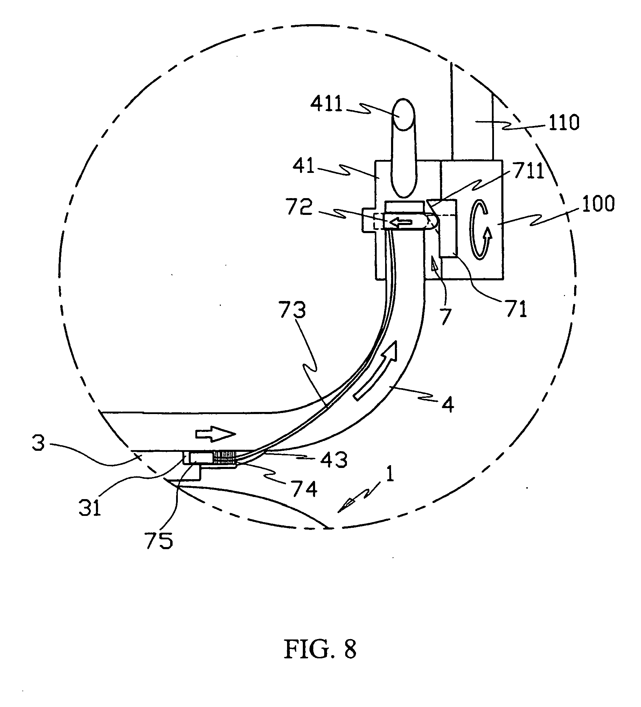

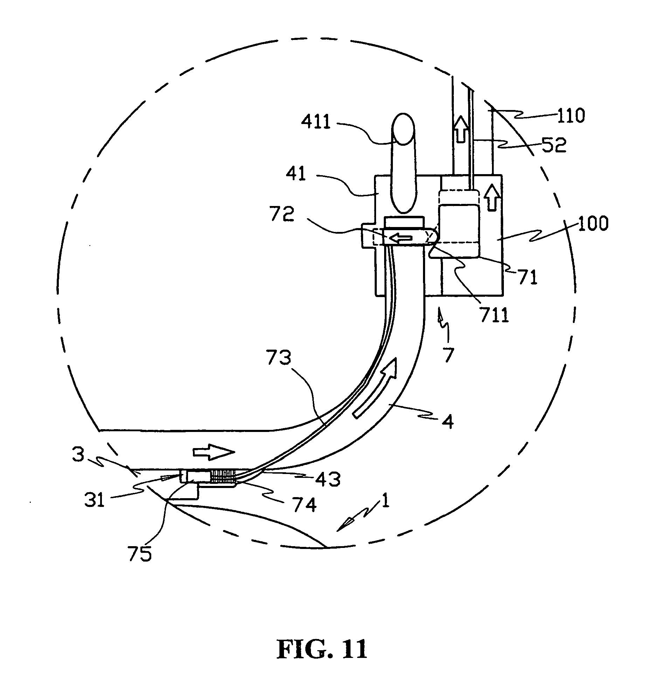

As shown in FIGS. 5, 8 and 11, the releasing mechanism 5 may further includes a driver 7 which comprises a sliding block 72, a linking member 73, a resilient member 74 and a locking member 75. The seat support 4 may further includes a guiding cover 43 for slidably receiving the locking member 75 to slide reciprocally therein. As shown in FIG. 8, the resilient member 74 is disposed in the guiding cover 43 for biasing the distal end of locking member 75 for keeping to engage within the locking position 31 on the support base 3, so as to fix the direction of the seat support 4.

Referring to FIGS. 5 and 8, the linking member 73 may be a flexible, such as string or wire. The driving disc 71 is rotatably arranged inside the swivel base 100 and may be rotated about the swivel base 100. The driving disc 71 can be formed with a slope face 711 for slidably contacting and pushing the sliding block 72 lineably and reciprocally inside the sliding groove 44. The sliding block 72 has one end to abut and slidably contact with the slope face 711, this makes the other end of sliding block 72 to pull the linking member 73. In the present embodiment, the linking member 73 has a length disposed inside the seat support 4, and connects the locking member 75.

Turning now to FIG. 8, when the handle bar 10 led the swivel base 100 to rotate, the slope face 711 pushes the sliding block 72 to drive the locking member 75. When the handle bar 10 is rotated near to the support base 3, the locking member 75 would be pulled to disengage from the locking position 31 of the support base 3.

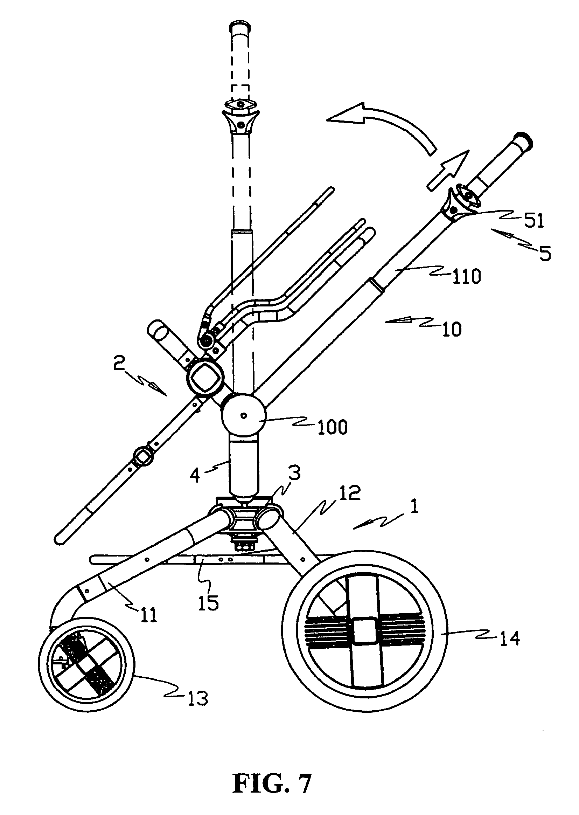

As shown in FIGS. 6 and 7, the direction of a seat frame 2 can be change by pulling the sliding sleeve 51 to disengage the releasing member 53 from the positioning groove 412, so as to make the handle bar 10 to be rotatable. When the handle bar 10 is rotated, the driving disc 71 would pull the sliding block 72, that cause the linking member 73 disengage the locking member 75 from the locking position 31. While locking member 75 disengaged from the locking position 31, the seat support 4 is freely rotatable for changing its direction.

With reference to FIG. 8, the swivel base 100 following the handle bar 10 to rotate, that cause the slope face 711 pushes the sliding block 72 to drive the locking member 75. When the handle bar 10 is rotated to near the support base 3, the locking member 75 would be disengaged from the locking position 31, that allows the seat support 4 to change its direction.

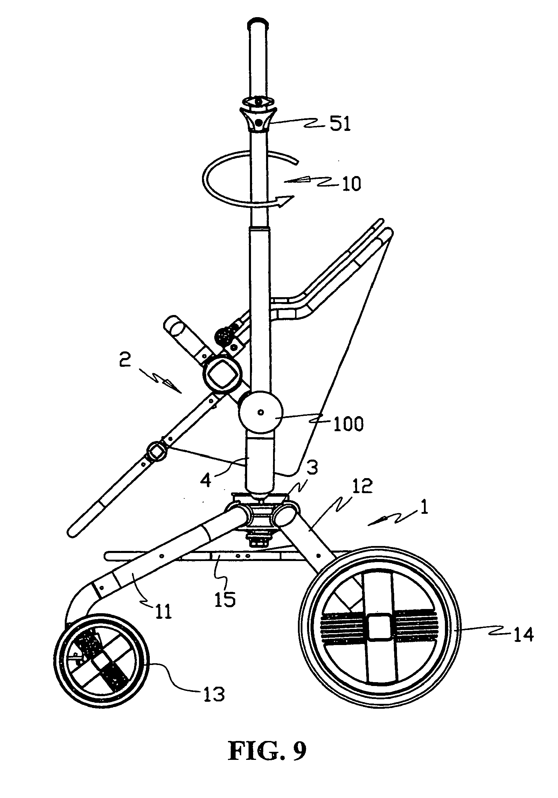

As shown in FIG. 9, in the meantime, the user can levelly rotates the handle bar 10 to drive the seat support 4 to change the direction of the seat frame 2, or the carry cot or the car seat (no shown) whenever it is connected to the seat support 4.

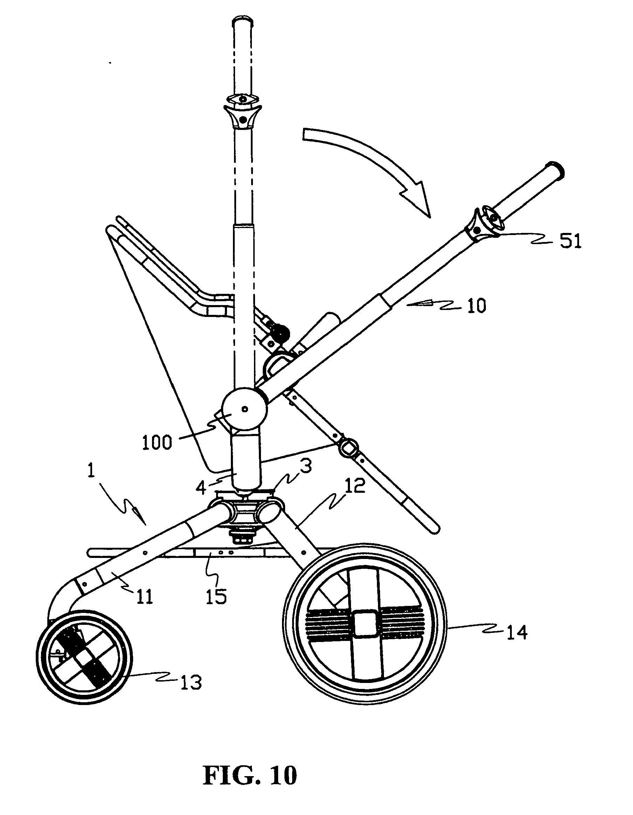

Further referring to FIG. 10, when the user pulled back the handle bar 10, the resilient member 74 is biasing against the locking member 75 to engage into the locking position 31; by this way, the direction of the seat support 4 can then be fixed automatically.

The front wheel set 13 of the present invention, may be an direction-unfixed wheel set, and the rear wheel set 14 is generally a direction-fixed wheel set; the handle bar 10 can be retained to the side near the rear wheel set 14 for the user to push and steer the stroller more easily.

As the pair of locking positions 31 apart from each other with 180°, the direction of the seat support 4 can either be the forward or backward of the stroller. A person who skilled in the art, may know that the locking positions 31 can be more than two position, and the locking positions 31 can be apart from each other less than 180°; for instance, 90° for adding the direction setting choice of the seat frame 2 for fun.

## Claims

1. A baby stroller frame, comprising:
a wheeled support frame (1), including a support base (3), a linking rod (15), a front leg (11), a rear leg (12), a front wheel set (13) and a rear wheel set (14); wherein the front and the rear leg (11, 12) are pivotally connected at the lower portion of the support base (3); the linking rod (15) is pivotally interconnected the front leg (11) and the rear leg (12); the lower ends of the front leg (11) and the rear leg (12) are connected the front wheel set (13) and the rear wheel set (14) respectively;
a seat support (4), pivotally connected to the support base (3) that is provided with a locking position (31) so that the seat support (4) is pivotable about a vertical axis; the seat support (4) having a pair of arms provided with a pair of connecting bases (41) each having a connecting portion (411) extended outwardly;
a locking member (75), disposed between the seat support (4) and the support base (3) for preventing the seat support (4) to be rotatable about the support base (3) when the locking member (75) is slidably engaged within the locking position (31);
a handle bar (10), pivotally connected to the arms of the seat support (4) for pushing the stroller; and
a releasing mechanism (5), connected between the handle bar (10) and the locking member (75); the releasing the mechanism (5) is driven by the rotation of the handle bar (10) to disengage the locking member (75) from the locking position (31).

2. A baby stroller frame according to claim 1, wherein the support base (3) is provided with an axle hole (32) for pivotally supporting the seat support (4).

3. A baby stroller frame according to claim 2, wherein the seat support (4) has an axle (42) extended downwardly from lower end for pivotally retained within the axle hole (32).

4. A baby stroller frame according to claim 1, wherein a seat frame (2) is detachably connectable to the pair of connecting bases (41).

5. A baby stroller frame according to claim 1, wherein a baby carry cot is detachably connectable to the pair of connecting bases (41).

6. A baby stroller frame according to claim 1, wherein a baby safety seat is detachably connectable to the pair of connecting bases (41).

7. A baby stroller frame according to claim 1, wherein the seat support (4) further includes a guiding cover (43) for slidably receiving the locking member (75) to slide reciprocally therein.

8. A baby stroller frame according to claim 1, wherein the handle bar (10) comprises a pair of swivel bases (100) which are pivotally connected to the connecting bases (41) that allows the handle bar (10) to be either lockable or rotatable.

9. A baby stroller frame according to claim 8, wherein the releasing mechanism (5) includes a sliding sleeve (51), a connecting member (52), a releasing member (53) and a resilient member (50), wherein the connecting member (52) interconnects the releasing member (53) and the sliding sleeve (51), and the resilient member (50) is biasing the releasing member (53) to slidably engage with the connecting base (41).

10. A baby stroller frame according to claim 8, wherein when the handle bar (10) is rotatable toward the top of the support base (3), so that the locking member (75) is releasable from the locking position (31).

11. A baby stroller frame according to claim 8, wherein the swivel base (100) disposed at the seat support (4) further including a driving disc (71) and a linking member (73); that when the driving disc (71) is rotated, the locking member (75) is released from the locking position (31) by pulling of the linking member (73).

12. A baby stroller frame according to claim 11, wherein the driving disc (71) is located inside the swivel base (100) and rotates together with the swivel base rotation.

13. A baby stroller frame according to claim 11, wherein the linking member (73) is flexible.

14. A baby stroller frame according to claim 11, wherein the seat support (4) further includes a driver (7) comprising a sliding block (72) which connected to the locking member (75) by the linking member (73); that the sliding block (72) is driven by rotating the swivel base (100) to pull the locking member (75) from the locking position (31).

15. A baby stroller frame according to claim 14, wherein the driving (71) disc has a slope face (711) for slidably contacting the sliding block (72) to move it linearly back and forth.

16. A baby stroller frame according to claim 14, wherein the sliding block (72) is slidably disposed within the arms of the seat support (4).

17. A baby stroller frame according to claim 14, wherein the locking member (75) is released from the locking position (31) via the driver (7) by pulling of the releasing mechanism (5) which is driven by the rotation of the handle bar (10).

18. A baby stroller frame according to claim 17, wherein the driver (7) is connected to the sliding sleeve (51) by the connecting member (52) that indirectly disengages the locking member (75) from the locking position (31) when it is pulled by the sliding sleve (51).

## Patentansprüche

1. Kindersportwagenrahmen, der umfasst:
einen mit Rädern versehenen Tragrahmen (1) mit einer Unterstützungsbasis (3), einer Verbindungsstange (15), einem vorderen Bein (11), einem hinteren Bein (12), einem Vorderradsatz (13) und einem Hinterradsatz (14); wobei das vordere und das hintere Bein (11, 12) am unteren Abschnitt der Unterstützungsbasis (3) angelenkt sind; die Verbindungsstange (15) das vordere Bein (11) und das hintere Bein (12) schwenkbar verbindet; die unteren Enden des vorderen Beins (11) und des hinteren Beins (12) mit dem Vorderradsatz (13) bzw. mit dem Hinterradsatz (14) verbunden sind;
einen Sitzträger (4) der an der Unterstützungsbasis (3) angelenkt ist und mit einer Verriegelungsposition (31) versehen ist, so dass der Sitzträger (4) um eine vertikale Achse schwenkbar ist; wobei der Sitzträger (4) ein Paar Arme besitzt, die mit einem Paar Verbindungsbasen (41) versehen sind, wovon jede einen nach außen sich erstreckenden Verbindungsabschnitt (411) besitzt;
ein Verriegelungselement (75), das zwischen dem Sitzträger (4) und der Unterstützungsbasis (3) angeordnet ist, um zu verhindern, dass der Sitzträger (4) und die Unterstützungsbasis (3) gedreht werden können, wenn das Verriegelungselement (75) in der Verriegelungsposition (31) gleitend in Eingriff ist;
einen Griffstab (10), der an den Armen des Sitzträgers (4) angelenkt ist, um den Wagen zu schieben; und
einen Freigabemechanismus (5), der zwischen dem Griffstab (10) und dem Verriegelungselement (75) verbunden ist; wobei der Freigabemechanismus (5) durch Drehen des Griffstabs (10) betätigt wird, um das Verriegelungselement (75) aus der Verriegelungsposition (31) zu lösen.

2. Kindersportwagenrahmen nach Anspruch 1, wobei die Unterstützungsbasis (3) mit einem Wellenloch (32) versehen ist, um den Sitzträger (4) schwenkbar zu unterstützen.

3. Kindersportwagenrahmen nach Anspruch 2, wobei der Sitzträger (4) eine Welle (42) besitzt, die sich vom unteren Ende nach unten erstreckt, um in dem Wellenloch (32) schwenkbar gehalten zu werden.

4. Kindersportwagenrahmen nach Anspruch 1, wobei ein Sitzrahmen (2) mit dem Paar Verbindungsbasen (41) lösbar verbunden werden kann.

5. Kindersportwagenrahmen nach Anspruch 1, wobei mit dem Paar Verbindungsbasen (41) ein Kindertragbett lösbar verbunden werden kann.

6. Kindersportwagenrahmen nach Anspruch 1, wobei mit dem Paar Verbindungsbasen (41) ein Kindersicherheitssitz lösbar verbunden werden kann.

7. Kindersportwagenrahmen nach Anspruch 1, wobei der Sitzträger (4) ferner eine Führungsabdeckung (43) aufweist, um das Verriegelungselement (75) gleitend aufzunehmen, damit es darin hin und her gleitet.

8. Kindersportwagenrahmen nach Anspruch 1, wobei der Griffstab (10) ein Paar Drehgelenkbasen (100) umfasst, die an den Verbindungsbasen (41) angelenkt sind, damit der Griffstab (10) entweder verriegelbar oder drehbar ist.

9. Kindersportwagenrahmen nach Anspruch 8, wobei der Freigabemechanismus (5) eine Gleithülse (51), ein Verbindungselement (52), ein Freigabeelement (53) und ein elastisches Element (50) umfasst, wobei das Verbindungselement (52) das Freigabeelement (53) und die Gleithülse (51) miteinander verbindet und das elastische Element (50) das Freigabeelement (53) vorbelastet, damit es mit der Verbindungsbasis (41) gleitend in Eingriff gelangt.

10. Kindersportwagenrahmen nach Anspruch 8, wobei dann, wenn der Griffstab (10) zur Oberseite der Unterstützungsbasis (3) drehbar ist, das Verriegelungselement (75) aus der Verriegelungsposition (31) freigegeben werden kann.

11. Kindersportwagenrahmen nach Anspruch 8, wobei die Drehgelenkbasis (100), die am Sitzträger (4) angeordnet ist, ferner eine Betätigungsscheibe (71) und ein Verbindungselement (73) aufweist, wobei dann, wenn die Betätigungsscheibe (71) gedreht wird, das Verriegelungselement (75) aus der Verriegelungsposition (31) freigegeben wird, indem an dem Verbindungselement (73) gezogen wird.

12. Kindersportwagenrahmen nach Anspruch 11, wobei sich die Betätigungsscheibe (71) in der Drehgelenkbasis (100) befindet und sich zusammen mit der Drehung der Drehgelenkbasis dreht.

13. Kindersportwagenrahmen nach Anspruch 11, wobei das Verbindungselement (73) flexibel ist.

14. Kindersportwagenrahmen nach Anspruch 11, wobei der Sitzträger (4) ferner eine Betätigungseinrichtung (7) umfasst, die einen Gleitblock (72) enthält, der mit dem Verriegelungselement (75) durch das Verbindungselement (73) verbunden ist, wobei der Gleitblock (72) durch Drehen der Drehgelenkbasis (100) angetrieben wird, um das Verriegelungselement (75) aus der Verriegelungsposition (31) zu ziehen.

15. Kindersportwagenrahmen nach Anspruch 14, wobei die Betätigungsscheibe (71) eine Neigungsfläche (711) besitzt, um mit dem Gleitblock (72) in einen Gleitkontakt zu gelangen, um ihn geradlinig rückwärts und vorwärts zu bewegen.

16. Kindersportwagenrahmen nach Anspruch 14, wobei der Gleitblock (72) in den Armen des Sitzträgers (4) gleitend angeordnet ist.

17. Kindersportwagenrahmen nach Anspruch 14, wobei das Verriegelungselement (75) aus der Verriegelungsposition (31) mittels der Betätigungseinrichtung (7) freigegeben wird, indem an dem Freigabemechanismus (5) gezogen wird, der durch die Drehung des Griffstabs (10) angetrieben wird.

18. Kindersportwagenrahmen nach Anspruch 17, wobei die Betätigungseinrichtung (7) mit der Gleithülse (51) mittels des Verbindungselements (52) verbunden ist, das das Verriegelungselement (75) indirekt aus der Verriegelungsposition (31) löst, wenn an ihm mittels der Gleithülse (51) gezogen wird.

## Revendications

1. Châssis de poussette pour enfants, comprenant :
un châssis de support sur roues (1) incluant une base de support (3), une barre de liaison (15), une jambe avant (11), une jambe arrière (12), un groupe de roues avant (13) et un groupe de roues arrière (14) ; dans lequel la jambe avant et la jambe arrière (11, 12) sont reliées en pivotement à la portion inférieure de la base de support (3) ; la barre de liaison (15) est interconnectée en pivotement à la jambe avant (11) et à la jambe arrière (12) ; les extrémités inférieures de la jambe avant (11) et de la jambe arrière (12) sont reliées au groupe de roues avant (13) et au groupe de roues arrière (14) respectivement ;
un support de siège (4), relié en pivotement à la base de support (3) et qui est doté d'une position de blocage (31) de sorte que le support de siège (4) est capable de pivoter autour d'un axe vertical ;
le support de siège (4) ayant une paire de bras dotés d'une paire de bases de liaison (41) ayant chacune une portion de liaison (411) s'étendant vers l'extérieur ;
un élément de blocage (75), disposé entre le support de siège (4) et la base de support (3) pour empêcher au support de siège (4) une rotation autour de la base de support (3) quand l'élément de blocage (75) est engagé en coulissement dans la position de blocage (31) ;
une barre-guidon (10), reliée en pivotement aux bras du support de siège (4) pour pousser la poussette ; et
un mécanisme de relâchement (5), relié entre la barre-guidon (10) et l'élément de blocage (75) ; le mécanisme de relâchement (5) étant entraîné par la rotation de la barre-guidon (10) pour dégager l'élément de blocage (75) hors de la position de blocage (31).

2. Châssis de poussette pour enfants (selon la revendication 1, dans lequel la base de support (3) est pourvue d'un trou d'axe (32) pour supporter en pivotement le support de siège (4).

3. Châssis de poussette pour enfants selon la revendication 2, dans lequel le support de siège (4) comprend un axe (42) qui s'étend vers le bas depuis l'extrémité inférieure et destiné à être retenu en pivotement à l'intérieur du trou d'axe (32).

4. Châssis de poussette pour enfants selon la revendication 1, dans lequel un cadre de siège (2) peut être relié de façon détachable à la paire de bases de liaison (41).

5. Châssis de poussette pour enfants selon la revendication 1, dans lequel un berceau porte-bébé peut être relié de façon détachable à la paire de bases de liaison (41).

6. Châssis de poussette pour enfants selon la revendication 1, dans lequel un siège de sécurité pour enfants peut être relié de façon détachable à la paire de base de liaison (41).

7. Châssis de poussette pour enfants selon la revendication 1, dans lequel le support de siège (4) inclut en outre un couvercle de guidage (43) pour recevoir en coulissement l'élément de blocage (75) afin qu'il coulisse en va-et-vient à l'intérieur de celui-ci.

8. Châssis de poussette pour enfants selon la revendication 1, dans lequel la barre-guidon (10) comprend une paire de bases pivotantes (100) qui sont reliées en pivotement aux bases de liaison (41) et qui permettent à la barre-guidon (10) d'être soit bloquée soit rotative.

9. Châssis de poussette pour enfants selon la revendication 8, dans lequel le mécanisme de relâchement (5) inclut un manchon coulissant (51), un élément de liaison (52), un élément de relâchement (53) et un élément élastique (50), dans lequel l'élément de liaison (52) interconnecte l'élément de relâchement (53) et le manchon coulissant (51), et l'élément élastique (50) sollicite l'élément de relâchement (53) pour qu'il s'engage en coulissement avec la base de liaison (41).

10. Châssis de poussette pour enfants selon la revendication 8, dans lequel la barre-guidon (10) est capable de rotation vers le sommet de la base de support (3), de sorte que l'élément de blocage (75) peut être relâché de la position de blocage (31).

11. Châssis de poussette pour enfants selon la revendication 8, dans lequel la base pivotante (100) disposée au niveau du support de siège (4) inclut encore un disque d'entraînement (71) et un élément de liaison (73) ; de sorte que quand le disque d'entraînement (71) est mis en rotation, l'élément de blocage (75) est relâché de la position de blocage (31) en tirant l'élément de liaison (73).

12. Châssis de poussette pour enfants selon la revendication 11, dans lequel le disque d'entraînement (71) est situé à l'intérieur de la base pivotante (100) et se met en rotation conjointement avec la rotation de la base pivotante.

13. Châssis de poussette pour enfants selon la revendication 11, dans lequel l'élément de liaison (73) est flexible.

14. Châssis de poussette pour enfants selon la revendication 11, dans lequel le support de siège (4) inclut en outre un moyen d'entraînement (7) comprenant un bloc de coulissement (72) qui est relié à l'élément de blocage (75) par l'élément de liaison (73), de sorte que le bloc coulissant (72) est entraîné en faisant tourner la base pivotante (100) pour tirer l'élément de blocage (75) hors de la position de blocage (31).

15. Châssis de poussette pour enfants selon la revendication 14, dans lequel le disque d'entraînement (71) possède une face en pente (711) pour venir en contact en coulissement contre le bloc coulissant (72) et le déplacer linéairement en va-et-vient.

16. Châssis de poussette pour enfants selon la revendication 14, dans lequel le bloc coulissant (72) est disposé en coulissement à l'intérieur des bras du support de siège (4).

17. Châssis de poussette pour enfants selon la revendication 14, dans lequel l'élément de blocage (75) est relâché de la position de blocage (31) via le moyen d'entraînement (7) en tirant le mécanisme de relâchement (5) qui est entraîné par la rotation de la barre-guidon (10).

18. Châssis de poussette pour enfants selon la revendication 17, dans lequel le pilote (7) est relié au manchon coulissant (51) par l'élément de connexion (52), lequel dégage indirectement l'élément de blocage (75) hors de la position de blocage (31) quand il est tiré par le manchon coulissant (51).
